Europäisches Patentamt

European Patent Office

Office européen des brevets

(19)

(11) Veröffentlichungsnummer: **0 301 224**
**A2**

(12) **EUROPÄISCHE PATENTANMELDUNG**

(21) Anmeldenummer: **88109730.7**

(22) Anmeldetag: **18.06.88**

(51) Int. Cl.⁴: **H01R 13/52**

(30) Priorität: **28.07.87 DE 3724946**

(43) Veröffentlichungstag der Anmeldung:
**01.02.89 Patentblatt 89/05**

(84) Benannte Vertragsstaaten:
**DE FR IT SE**

(71) Anmelder: **ROBERT BOSCH GMBH**
**Postfach 50**
**D-7000 Stuttgart 1(DE)**

(72) Erfinder: **Bernard, Hans**
**Siebenbürgenerstrasse 19**
**D-8502 Zirndorf(DE)**
Erfinder: **Hettich, Gerhard, Dr.-Phys.**
**Martin-Renz-Strasse 8**
**D-8501 Dietenhofen(DE)**
Erfinder: **Schmid, Hans-Dieter, Dr.-Ing.**
**Kamenzostrasse 8**
**D-8500 Nürnberg 60(DE)**
Erfinder: **Walter, Berthold**
**Ahornweg 13**
**D-8507 Oberasbach(DE)**

(54) **Elektrischer Kontakt.**

(57) Es wird ein elektrischer Kontakt zwischen einer
Kontaktfeder (17) und einem Kontaktstift (19 bzw.
20) vorgeschlagen, der bei der Montage eines den
Kontakt aufnehmenden Sensor-Gehäuse verdeckt,
also unzugänglich angeordnet ist. Beim Zusammenfügen des Gehäuses (1) wird der Kontakt selbsttätig
hergestellt. Der Sensor besitzt fünf dieser Kontakte
und ist als Drucksensor für die Druckluftbremse von
Kraftfahrzeugen bestimmt.

FIG.1

EP 0 301 224 A2

# Elektrischer Kontakt

## Stand der Technik

Die Erfindung bezieht sich auf einen elektrischen Kontakt nach der Gattung des Hauptanspruchs. Ein solcher elektrischer Kontakt ist bekannt.

Bei derartigen Kontakten besteht die Forderung eines guten Stromüberganges und einfacher und zuverlässiger Herstellung des Kontaktes zwischen der Kontaktfeder und dem Kontaktstift, insbesondere bei einer Fertigung in Massenproduktion. Die bekannte Bauart hat den Nachteil, daß eine sichere und zuverlässige Kontaktierung nicht immer gewährleistet ist und daß die Kontaktierung nicht selbsttätig und auch bei verdeckter Anordnung erfolgen kann.

## Vorteile der Erfindung

Der eingangs genannte elektrische Kontakt mit den kennzeichnenden Merkmalen des Hauptanspruchs hat demgegenüber den Vorteil, daß er einfach herzustellen ist und daß er sicher und zuverlässig ist.

Gemäß einem weiteren Merkmal der Erfindung ist es vorteilhaft, daß Herstellungs-Toleranzen bei der Montage des Kontaktes ausgeglichen werden. Desweiteren ist es von Vorteil, daß Kontaktfeder und Kontaktstift bei der Montage miteinander verpreßt werden, wobei an der Kontaktstelle eine Verschweißung der Kontaktflächen entsteht. Auch ist es vorteilhaft, daß durch die Federwirkung der Kontaktfeder Temperatureinflüsse aufgefangen werden.

Dazu kommt, daß gemäß einem weiteren Merkmal der Unteransprüche auch von Vorteil ist, daß die Kontaktstelle gegen äußere Einflüsse, die eventuell eine Korrosion bewirkten könnten, abgedeckt ist.

Schließlich ist es auch von Vorteil, daß beim Befestigen des Deckelteils am Bodenteil gleichzeitig mehrere Kontakte selbsttätig hergestellt werden und dies an einer verdeckten Stelle, die bei der Montage nicht mehr zugänglich ist.

## Zeichnung

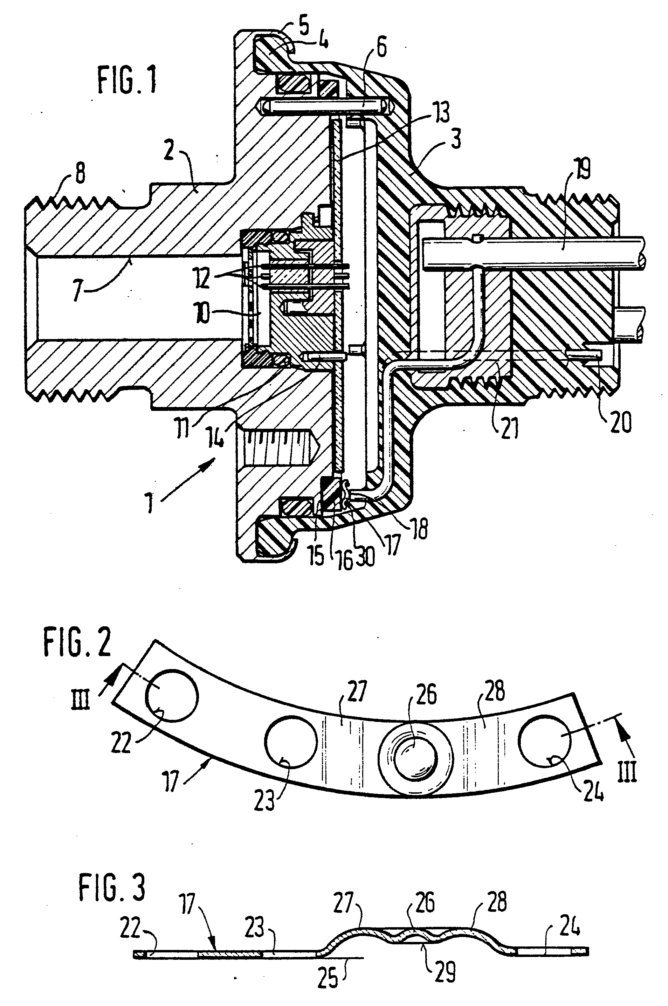

Ein Ausführungsbeispiel der Erfindung ist in der Zeichnung dargestellt und in der nachfolgenden Beschreibung näher erläutert. Es zeigen Figur 1 einen Querschnitt durch ein zweiteiliges Gehäuse eines Drucksensor, Figur 2 eine Kontaktfeder in Draufsicht und Figur 3 einen Schnitt nach der Linie III-III in Figur 2.

## Beschreibung des Ausführungsbeispieles

Ein weitgehend rotationssymmetrischer Drucksensor 1 hat einen Gehäusebodenteil 2 und einen Gehäusedeckelteil 3, dessen unterer Ringrand 4 von einer mit einer Rollierung versehener Ringaufnahme 5 des Bodenteils 2 übergriffen ist. Beide Teile 2 und 3 sind durch zwei Fixierstifte 6 - von denen nur einer gezeichnet ist - gegegeneinander ausgerichtet. Der Gehäusebodenteil 2 hat eine zentrale Bohrung 7 und ein Außengewinde 8 (es kann jedoch dort auch ein Innengewinde vorgesehen sein), die zum Anschluß einer Druckluftleitung eines Druckluft-Bremssystems bestimmt sind.

Im Gehäusebodenteil 2 ist am inneren Ende der Bohrung 7 ein Sensor-Element 10 angeordnet, das mittels einer Ringdichtung 11 gegenüber der Druckluft abgedichtet ist. Im Sensor-Element 10 ist ein nicht dargestellter Verstärker vorgesehen, der über vier eingeglaste Drähte 12 an einen Hybrid 13 angeschlossen ist. Der Hybrid 13 ist gegenüber dem Sensor-Element 10 ebenfalls mittels eines Fixierstiftes 14 ausgerichtet.

In einer Ringvertiefung 15 des Bodenteils 2 liegt ein Kunststoff-Tragring 16, auf den fünf Kontaktfedern 17 aufgenietet sind, wie sie in den Figuren 2 und 3 dargestellt sind. Gegenüber jeder Kontakfeder 17 ist im Deckelteil 3 eine Kontaktfläche 18 eines Kontaktstiftes 19 bzw. 20 angeordnet. Die Kontaktstifte 19 und 20 werden von einem Einsatz 21 getragen, der zentral im Deckelteil 3 angeordnet ist. Drei Kontakstifte 19 von den fünf Kontaktstiften 19 und 20 stehen weiter aus dem Deckelteil 3 heraus, zwei Kontaktstifte 20 sind verdeckt im Deckelteil 3 zurückgesetzt angeordnet.

Die fünf Kontaktfedern 17 sind unter sich gleich. Sie sind aus einem Flachmaterial hergestellt und haben die Form eines Kreisring-Abschnittes (Figur 2). Jede Kontaktfeder 17 hat außen drei Befestigungsstellen 22, 23, und 24 für die Vernietung mit dem Kunststoffring 16, deren Befstigungsebene 25 an der Unterseite der Kontaktfeder 17 liegt. Im Bereich einer innen angeordneten, vergoldeten Kontaktstelle hat die Kontaktfeder 17 eine halbkugelförmige Wölbung 26, und zu beiden Seiten dieser Wölbung 26 ist je eine weitere Wölbung 27 und 28 vorgesehen. Letzte weisen je einen Radius auf, der größer ist als der Radius der halbkugelförmigen Wölbung 26 (vgl. Figur 3). Damit ist die halbkugelförmige Wölbung 26 steifer als die beiden anderen Wölbungen 27 und 28.

Eine der Befestigungsebene 25 zugekehrte Fußfläche der halbkugelförmigen Wölbung 26 bildet eine Andrückfläche 29 für die Montage jedes aus Kontaktfeder 17 und Kontaktstift 19 bzw. 20 bestehende Kontaktes.

Bei der Montage des Deckelteils 3 werden zuerst die beiden weicheren Wölbungen 27 und 28 von den Stirnend-Kontaktflächen 18 der Kontaktstifte 19 bzw. 20 federnd eingedrückt, bis die Fuß-Andrückfläche 29 der halbkugelförmigen Wölbung 26 an dem Kunststoff-Tragring 16 anliegt. Anschließend wird auch die härtere Kontaktstellen-Wölbung 26 eingedrückt, und zwar etwa so viel, daß in axialer Richtung auftretende Toleranzen ausgeglichen werden. Dabei wird die Kuppe der Wölbung 26 in die ihr gegenüberliegende Kontaktfläche 17 des Kontaktstiftes 19 bzw. 20 so hineingedrückt, daß dabei ein inniger Kontakt entsteht, ja sogar eine Verschweißung entstehen kann.

Zur weiteren Verbesserung des Stromflusses wird vor der Montage um die kugelförmige Kontaktstellen-Wölbung 26 herum ein Leitkleber 30 angebracht, der die Kontaktstelle beim Niederdrücken der Wölbung 26 umschließt und damit vor Korrosion schützt.

Daraus geht hervor, daß die Kontakte zwischen den Kontaktfedern 17 und den Kontaktstiften 19 und 20 bei der Montage des Deckelteils 3 am Bodenteil 2 selbsttätig gebildet werden und daß das automatische Kontaktieren an einer bei der Montage von Boden- und Deckelteil nicht zugänglichen Stelle des Drucksensors 1 erfolgt.

Bei Einwirkung unterschiedlicher Außentemperaturen bewirkt die federnde Vorspannung der Kontaktfeder 17 einen selbsttätigen Maßausgleich.

## Ansprüche

1. Elektrischer Kontakt zwischen einer Kontaktfeder und einem Kontaktstift, wobei die Kontaktfeder eine Befestigungsebene und eine an einer Ausbiegung aus der Befestigungsebene vorgesehene Kontaktstelle hat, die als Wölbung ausgebildet ist, dadurch gekennzeichnet, daß neben der Kontaktstellen-Wölbung (26) noch mindestens eine weitere Wölbung (27, 28) an der Ausbiegung der Kontaktfeder (17) vorgesehen ist und daß diese weitere mindestens eine Wölbung (17, 28) einen Radius aufweist, der größer ist als der Radius der Wölbung (26) an der Kontaktstelle.

2. Elektrischer Kontakt nach Anspruch 1, dadurch gekennzeichnet, daß die Kontaktstellen-Wölbung (26) halbkugelig ausgebildet ist.

3. Elektrischer Kontakt nach Anspruch 1 oder 2, dadurch gekennzeichnet, daß die Kontaktstellen-Wölbung (26) vergoldet ist.

4. Elektrischer Kontakt nach einem der Ansprüche 1 bis 3, dadurch gekennzeichnet, daß die Kontaktfeder (17) ein Stück Flachmaterial ist und ihre beiden äußeren Enden in der Befestigungsebene (25) liegen und daß die Wölbung (26) an der Kontaktstelle zwischen den zwei weiteren Wölbungen (27, 28) angeordnet ist.

5. Elektrischer Kontakt nach Anspruch 4, dadurch gekennzeichnet, daß die Kontaktfeder (17) in ihrer Befestigungsebene (25) drei Befestigungsstellen (22, 23, 24) aufweist und daß die Wölbung (26) an der Kontaktstelle und die zwei weiteren Wölbungen zwischen zwei einander benachbarten der drei Befestigungsstellen (22, 23, 24) liegen.

6. Elektrischer Kontakt nach Anspruch 4 oder 5, dadurch gekennzeichnet, daß eine der Befestigungsebene (25) zugekehrte Fußfläche der Wölbung (26) an der Kontaktstelle eine Andrückfläche (29) für die Montage des Kontaktes bildet.

7. Elektrischer Kontakt nach einem der Ansprüche 1 bis 6, dadurch gekennzeichnet, daß die Kontaktfeder (17) ein Kreisringabschnitt ist (Figur 2).

8. Verfahren zur Herstellung eines Kontaktes nach einem der Ansprüche 1 bis 7, dadurch gekennzeichnet, daß die Kontaktfeder (17) an einem Tragring (16) befestigt wird und bei der Montage des Kontaktes mit Hilfe des Kontaktstiftes (19 bzw. 20) gegen die Federkraft der einen oder der zwei weiteren Wölbungen (27, 28) auf ihren Tragring (16) niedergedrückt wird, bis eine Andrückfläche (29) der Kontaktstellen-Wölbung (26) an dem Tragring (16) anliegt, und daß anschließend auch die Kontaktstellen-Wölbung (26) in der Größe etwa auftretender Toleranzen eingedrückt wird, wobei die Kuppe der Wölbung (26) sich in eine ihr gegenüberliegende Kontaktfläche (18) des Kontaktstiftes (19 bzw. 20) einpreßt.

9. Verfahren nach Anspruch 8, dadurch gekennzeichnet, daß vor der Montage des Kontaktes um die Kontaktstellen-Wölbung (26) herum ein Leitkleber (30) angebracht wird, der die Kontaktstelle beim Niederdrücken der Wölbung (26) umschließt und damit vor Korrosion schützt.

10. Verfahren zur Herstellung eines Drucksensors, insbesondere für Druckmittelbremsanlagen für Kraftfahrzeuge, mit einem elektrischen Kontakt nach einem der Ansprüche 1 bis 7, dadurch gekennzeichnet, daß der Drucksensor (1) einem im wesentlichen rotationssymmetrischen Bodenteil (2) und Deckelteil (3) aufweist, daß ferner im Bodenteil (2) auf den Umfang verteilt fünf Kontaktfedern (17) und im Deckelteil (3) fünf Kontaktstifte (19, 20) angeordnet sind und daß die Kontakte selbsttätig gebildet werden bei der Befestigung des Deckelteils (3) an dem Bodenteil (2).

FIG.1

FIG.2

FIG.3